# EUROPÄISCHE PATENTSCHRIFT

(11) **EP 0 976 492 B1**
(45) Veröffentlichungstag und Bekanntmachung des Hinweises auf die Patenterteilung: **05.12.2001**
(21) Anmeldenummer: 99113109.5
(22) Anmeldetag: 07.07.1999
(51) Int. Cl.: B23P 15/32, B27G 15/00, B23P 15/34, B22F 7/06

(54) **Schaftfräser mit Hartmetallschneiden**
End mill with hard metal cutters
Fraise à queue avec élements de coupe en métal dur

(30) Priorität: 21.07.1998 DE 19832551
(43) Veröffentlichungstag der Anmeldung: 02.02.2000
(73) Patentinhaber: TIGRA Hartstoff GmbH, 86698 Oberndorf a. Lech (DE)
(72) Erfinder: Feld, Harald, Dr., 86678 Ehingen (DE)
(74) Vertreter: Patentanwälte Dipl.-Ing. R. Holzer Dipl.-Ing. (FH) W. Gallo

(56) Entgegenhaltungen:
- DE-U- 29 701 161
- US-A- 4 239 427
- US-A- 5 221 166
- US-A- 5 695 304
- PATENT ABSTRACTS OF JAPAN vol. 1995, no. 02, 31. März 1995 (1995-03-31) & JP 06 315835 A (SUMITOMO ELECTRIC IND LTD), 15. November 1994 (1994-11-15)

## Beschreibung

Die vorliegende Erfindung bezieht sich auf einen Schaftfräser gemäß dem Oberbegriff des Patentanspruchs 1 und wie z.B. aus DE-U-29 701 161 bekannt ist.

Schaftfräser mit Hartmetallschneiden werden insbesondere für die Holz- und Kunststoffbearbeitung eingesetzt, beispielsweise zur Bearbeitung von Preßspanplatten, da dort normale Fräserschneiden sehr schnell stumpf werden würden.

Schaftfräser mit Hartmetallschneiden werden bekanntermaßen in der Weise ausgeführt, daß der Schaftfräserkörper aus Werkzeugstahl hergestellt und die Hartmetallschneiden auf- bzw. eingelötet werden. Es ist dabei auch bekannt, den Schaftfräserkörper zweiteilig herzustellen, nämlich aus einem Schaftteil und einem Kopfteil, die miteinander verschraubt oder auf sonstige Weise verbunden sind, insbesondere wenn der Kopfteil einen.größeren Durchmesser hat, beispielsweise bei als Bohrer dienenden Schaftfräsern.

Daß bei herkömmlichen Fräswerkzeugen der genannten Art nur die Schneiden aus Hartmetall hergestellt und auf Werkzeugkörper aus Werkzeugstahl aufgelötet werden, hat einen wesentlichen Grund darin, daß das Schleifen von Hartmetall sehr mühsam und zeitaufwendig ist und es daher wichtig ist, das Wegschleifen größerer Materialmengen wegen der Kosten zu vermeiden. Gerade bei als Bohrer zu verwendenden Schaftfräsern sind aber erhebliche Freischnitte zur Spanabführung notwendig.

Aber auch bei eingesetzten Hartmetallschneiden müssen diese eine entsprechende Größe haben, damit sie eingelötet werden können, die notwendige Abstützung haben und auch die im Hinblick auf ihre Sprödigkeit notwendige mechanische Festigkeit haben. Sie sind meist plattenförmig ausgebildet. Auch dies bedingt, namentlich an der Spanfläche, in der Praxis einen ziemlichen Schleifaufwand.

Der Erfindung liegt die Aufgabe zugrunde, eine Möglichkeit zu schaffen, durch Vermeidung von Schleifaufwand Schaftfräser mit Hartmetallschneiden kostengünstiger herstellen zu können.

Diese Aufgabe wird erfindungsgemäß durch die im Patentanspruch 1 angegebene Konstruktion des Schaftfräsers gelöst und in den Unteransprüchen vorteilhaft weiter ausgestaltet.

Demgemäß besteht die erfindungsgemäße Lösung darin, daß der die Schneide oder die Schneiden umfassende Bereich des Werkzeugkörpers insgesamt aus Hartmetall hergestellt und mit einer Formschlußverbindung zur Verbindung mit dem übrigen Werkzeugkörperteil, der aus Werkzeugstahl bestehen kann, ausgebildet wird, wobei die Besonderheit darin besteht, daß dieser aus Hartmetall bestehende Werkzeugkörperteil einschließlich der angeformten Schneiden im Spritzgießverfahren als Rohling hergestellt und anschließend an den Schneidenbereichen geschliffen ist.

Die Möglichkeit, Hartmetallkörper in einer Art Spritzgießverfahren herzustellen, ist an sich bereits bekannt. Dazu wird das mit einigen Prozent Kunstharzbeimischung als Plastifizierungsmittel fließfähig gemachte Metallpulver in die gewünschte Rohform spritzgegossen, wonach der Sintervorgang erfolgt.

Der so geformte Teil des Werkzeugkörpers kann an den Schneidenbereichen schon in der Rohform mit den notwendigen Freischnitten ausgebildet sein. Die hieraus resultierenden Vorteile sind die, daß zum einen der Werkzeugkörper insgesamt weniger massiv zu sein braucht als bei herkömmlichen Schaftfräsern mit relativ großem Kopfdurchmesser und daß auch Hinterschneidungen an den Kantenbereichen so gestaltet werden können, daß die zu schleifende Schneidenfläche wesentlich geringer ist als bei herkömmlichen, in Werkzeugkörper aus Werkzeugstahl eingelöteten und dort als Schneiden dienenden Hartmetallplatten.

Auf diese Weise können beispielsweise Köpfe von Schaftfräsern insgesamt aus Hartmetall hergestellt und mit einer Innengewindebohrung ausgebildet werden, in welche der mit einem entsprechenden Gewindezapfen ausgestattete Fräserschaft dann eingeschraubt und zur Sicherung beispielsweise geklebt werden kann.

Auch Oberfräser können in dieser Weise hergestellt werden, indem ein die Schneide umfassender Teil als mit einem angeformten Schwalbenschwanzprofil versehener stabförmiger Block ausgebildet und auf einen mit entsprechendem Gegenprofil versehenen Schaft aufgesteckt werden kann, wobei dann eine Klebeverbindung möglich ist und das bisherige Auflöten einer Schneidplatte entfallen kann.

Zwei Ausführungsbeispiele der Erfindung werden nachstehend unter Bezugnahme auf die anliegenden Zeichnungen mehr im einzelnen beschrieben, in denen zeigt
- Fig. 1: einen Schaftfräser nach der Erfindung in teilweise axial geschnittener Ansicht,
- Fig. 2: eine Stirnansicht des Schaftfräsers nach Fig. 1,
- Fig. 3: eine Ansicht eines Oberfräsers nach der Erfindung, und
- Fig. 4: einen Querschnitt längs der Linie IV - IV durch den Oberfräser nach Fig. 3,
- Fig. 5: eine weitere Ausführungsform eines als Bohrer dienenden Schaftfräsers in Seitenansicht, und
- Fig. 6: den Fräser nach Fig. 5 in Stirnansicht.

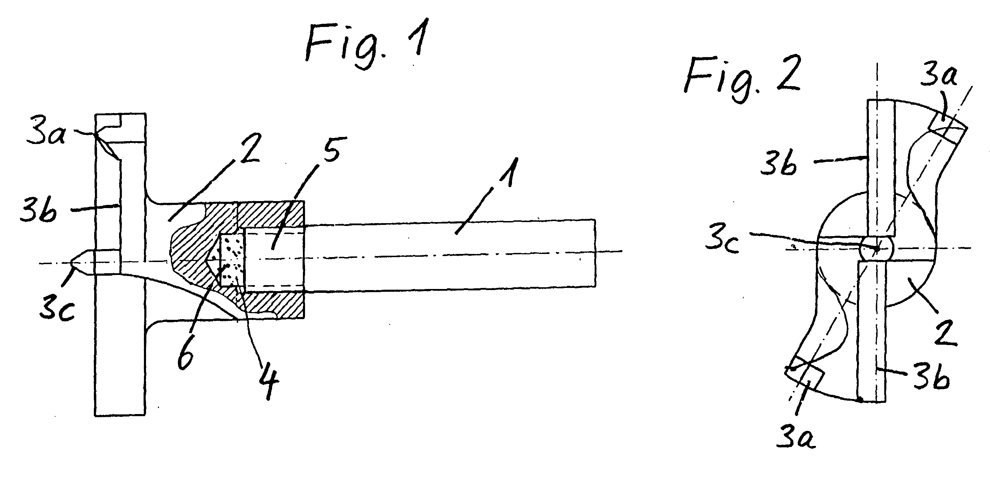

Die Fig. 1 und 2 zeigen einen als Bohrer ausgebildeten Schaftfräser zum Bohren relativ großer runder Aussparungen in Preßspanplatten, wie das beispielsweise in der Möbelindustrie zum Ausfräsen von Aufnahmeöffnungen für Scharniere und dergl. üblich ist.

Der dargestellte Fräser besteht aus einem Schaft 1 und einem Kopf 2. Der Kopf 2 ist mitsamt den angeformten Schneiden 3a, 3b und 3c aus einem Stück aus Hartmetall hergestellt und mit einer Innengewindebohrung 4 versehen, in welche ein Gewindezapfen 5 des Schafts 1 eingedreht ist.

Der Schaft 1 mit dem Gewindezapfen 5 besteht aus Werkzeugstahl.

Der Kopf 2 mit den Schneiden 3a, 3b und 3c ist nach dem oben schon erwähnten Spritzgießverfahren als Sinterrohling hergestellt, sodann gesintert und schließlich durch Schleifen der Schneiden fertiggestellt worden. Die Schneiden umfassen bei dem dargestellten Ausführungsbeispiel, wie aus Fig. 2 mehr im Einzelnen hervorgeht, zwei äußere Vorschneiderschneiden 3a, zwei Hauptschneiden 3b und eine Bohrspitze 3c. Die Haupt' schneiden 3b sind gegen die Bohrspitze 3c und die Vorschneider 3a axial zurückgesetzt. Die Funktionen dieser Schneiden sind bekannt; die Vorschneider 3a ergeben einen präzisen Schnitt am Bohrungsrand ohne Ausfransen und die Hauptschneiden 3b dienen zum Räumen des Materials zwischen der von der Bohrspitze 3c erzeugten Kernbohrung und dem von den Vorschneidern 3a erzeugten Randschnitt.

Der Schaft 1 ist mit seinem Gewindezapfen 5 vorzugsweise in die Gewindebohrung 4 eingeklebt, so daß alle Hohlräume mit Kunstharzklebstoff 6 oder dergl. ausgefüllt sind.

Wie man insbesondere aus Fig. 2 sieht, ist der Kopf 2 gegenüber herkömmlichen Köpfen solcher Werkzeugkörper sehr viel schlanker und weniger massiv, und zwar, wie man aus Fig. 1 sieht, sowohl in der axialen Ausdehnung als auch, wie man aus Fig. 2 sieht, in der umfangsmäßigen Ausdehnung der den beiden Schneiden 3b zugeordneten Bereiche.

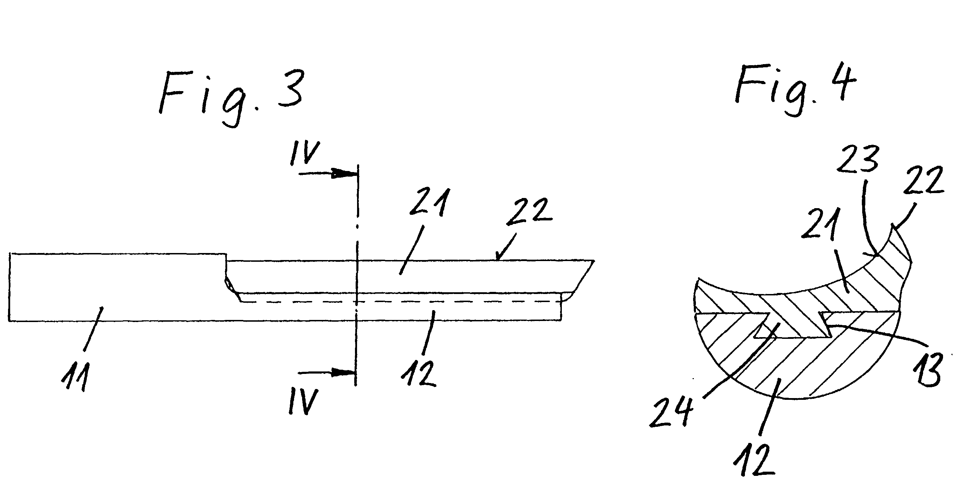

Die Fig. 3 und 4 zeigen in Ansicht und im Schnitt einen Oberfräser, bestehend aus einem Schaft 11 mit einem vorderen Teil 12 in Form eines Zylindersegments mit eingearbeiteter Schwalbenschwanznut 13 (siehe Querschnitt nach Fig. 4), und einem mit einer Schneide versehenen Hartmetallkörper 21 mit einer Schneide 22, einer eingearbeiteten Spannut 23 und einem rückwärtigen angeformten Schwalbenschwanz 24, der in die Schwalbenschwanznut 13 eingreift und dort vorzugsweise eingeklebt ist.

Während der Schaft 11 wiederum aus Werkzeugstahl besteht, ist der Hartmetallkörper 21 wiederum in den erwähnten Spritzgußverfahren als Rohling hergestellt und dann nach dem Sinten durch Verkleben mit dem Schaft verbunden, wobei durch das Zusammenwirken der Schwalbenschwanznut 13 und des Schwalbenschwanzes 24 eine formschlüssige Verbindung hergestellt ist. Die Schneide 22 kann vor oder nach dem Verbinden mit dem Schaft 11 geschliffen sein.

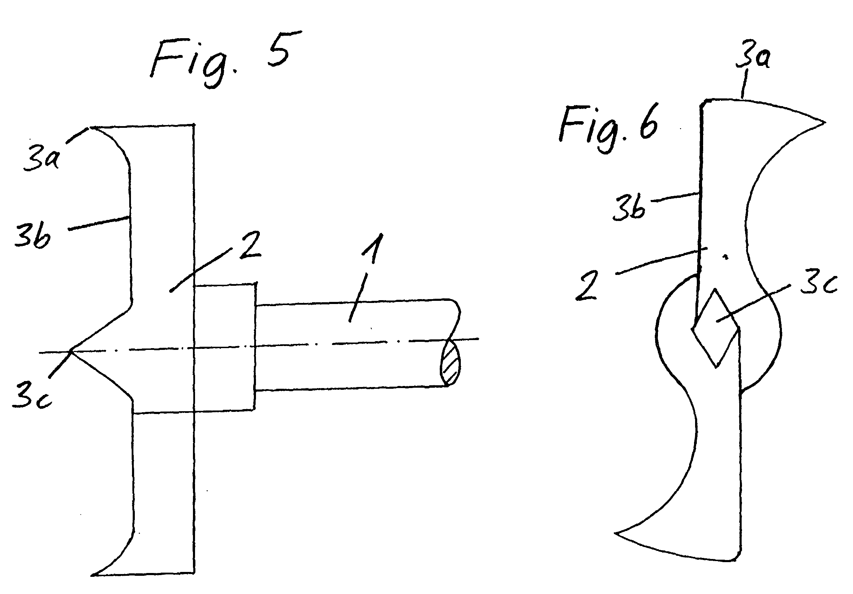

Die Fig. 5 und 6 zeigen eine Variante der in den Fig. 1 und 2 schon dargestellten Ausführungsform eines Bohrers, wobei die radialen Arme des Kopfes 2 noch schlanker ausgebildet sind und die Hauptschneiden 3b außen fließend in die Vorschneider 3a übergehen.

## Patentansprüche

1. Schaftfräser mit Hartmetallschneiden, bestehend aus einem Schaft (1) aus Werkzeugstahl und einem damit formschlüssig verbundenen Kopf (2), **dadurch gekennzeichnet daß** der Kopf als integrierter Werkzeugkörper mit angeformten Schneiden (3a, 3b, 3c) insgesamt aus Hartmetall hergestellt ist und zwar in Form einer zunächst im Spritzgießverfahren aus pulverisiertem Hartmetallwerkstoff mit plastifizierendem Bindemittel hergestellten Rohlings, der nach dem Sintern durch Anschleifen der Schneiden fertig bearbeitet wurde.

2. Schaftfräser nach Anspruch 1, wobei die Formschlußverbindung zwischen Schaft (1) und Kopf durch ein am Schaft gebildetes Außengewinde und ein im Kopf gebildetes Innengewinde hergestellt ist.

3. Schaftfräser nach Anspruch 1 oder 2, wobei der Kopf (2) als Bohrkopf mit einer zentrischen Bohrspitze (3c) und mindestens zwei radial von einem mittigen Nabenbereich wegragenden schlanken Armen mit Schneidkanten (3b) und äußeren Vorschneidkanten (3a) ausgebildet ist.

4. Schaftfräser nach Anspruch 3, wobei die Hauptschneiden (3b) der Arme des Kopfes (2) fließend in die Vorschneidekanten (3a) übergehen.

5. Schaftfräser nach Anspruch 1, wobei der Kopf als Oberfräsenschneidenkörper (21) mit angeformter Frässchneide (22) und Spannut (23) ausgebildet ist, und wobei die Formschlußverbindung durch ein rückseitig an den Oberfräsenschneiden körper (21) angeformtes und in eine entsprechende Längsnut (13) des Schaftvorderteils (12) eingreifendes Profil (24) gebildet ist.

6. Schaftfräser nach Anspruch 5, wobei die Nut (13) als Schwalbenschwanznut und das Profil (24) als Schwalbenschwanzprofil ausgebildet ist.

7. Schaftfräser nach einem der Ansprüche 1 bis 6, wobei die Formschlußverbindung zwischen Kopf (2) und Schaft (1) außerdem durch Verkleben gesichert ist.

## Claims

1. Milling cutter with hard metal cutting edges, consisting of a shaft (1) of tool steel and a head (2) connected to this by form-fit, **characterised in that** the head is produced as a whole from hard metal as an integral tool body with shaped cutting edges (3a, 3b, 3c) in the form of a blank first produced in the injection moulding process from pulverised hard metal material with plasticising binding agents and finished-machined after sintering by grinding the cutting edges.

2. Milling cutter according to claim 1, where the form-fit connection between the shaft (1) and head is achieved by an outer thread formed on the shaft and an inner thread formed in the head.

3. Milling cutter according to claim 1 or 2, where the head (2) is formed as a drilling head with a central drill tip (3c) and at least two narrow arms projecting radially out from a central hub area and having cutting edges (3b) and outer precutting edges (3a).

4. Milling cutter according to claim 3, where the main cutting edges (3b) of the arms of the head (2) transform smoothly into the precutting edges (3a).

5. Milling cutter according to claim 1, where the head is formed as a surface milling cutter body (21) with shaped milling cutting edges (22) and clamping groove (23), and where the form-fit connection is achieved by a profile (24) which is formed on the rear of the surface milling cutter edge body (21) and engages in a corresponding longitudinal groove (13) of the shaft front part (12).

6. Milling cutter according to claim 5, where the groove (13) is shaped as a dovetail groove and the profile (24) as the dovetail profile.

7. Milling cutter according to any of claims 1 to 6, where the form-fit connection between the head (2) and shaft (1) is also secured by gluing.

## Revendications

1. Fraise à queue à arêtes de coupe en métal dur, comprenant une queue (1) en acier à outils et une tête (2) reliée par complémentarité de forme à la queue, **caractérisée par le fait que** la tête est fabriquée en tant que corps d'outil à arêtes de coupe (3a, 3b, 3c) intégrées entièrement en métal dur sous la forme d'une ébauche qui est d'abord réalisée par moulage par injection à partir de métal dur pulvérisé et de liant plastifiant et qui, après frittage, est finie par meulage des arêtes de coupe.

2. Fraise à queue suivant la revendication 1, la liaison par complémentarité de forme entre la queue (1) et la tête étant établie par un filetage extérieur sur la queue et un filetage intérieur dans la tête.

3. Fraise à queue suivant la revendication 1 ou 2, la tête (2) étant réalisée sous forme de mèche avec une pointe centrale (3c) et au moins deux bras effilés faisant saillie sur une zone de moyeu centrale et portant des arêtes de coupe (3b) et des arêtes extérieures de traceurs (3a).

4. Fraise à queue suivant la revendication 3, les arêtes de coupe principales (3b) des bras de la tête (2) se raccordent sans discontinuité aux arêtes de traceurs (3a).

5. Fraise à queue suivant la revendication 1, la tête étant réalisée sous forme de corps d'arête de fraise de défonçage (21) avec arête de fraisage (22) intégrée et avec rainure à copeau (23), la liaison par complémentarité de forme étant établie par un profil (24) formé sur le corps d'arête de fraise de défonçage (21) et engagé dans une rainure longitudinale (13) correspondante de la partie avant de queue (12).

6. Fraise à queue suivant la revendication 1, la rainure (13) étant une rainure en queue d'aronde et le profil (24) étant un profil en queue d'aronde.

7. Fraise à queue suivant l'une des revendications 1 à 6, la liaison par complémentarité de forme entre la tête (2) et la queue (1) étant bloquée par collage.
